# EUROPEAN PATENT SPECIFICATION

(11) **EP 0 702 055 B1**
(45) Date of publication and mention of the grant of the patent: **24.04.2002**
(21) Application number: 95810553.8
(22) Date of filing: 06.09.1995
(51) Int. Cl.: C08K 7/00, C08K 13/00, C09B 67/04

(54) **Stir-in organic pigments**
Vermischbare organische Pigmente
Pigments organiques prêts à être mélangés

(30) Priority: 14.09.1994 US 305549; 07.06.1995 US 475165
(43) Date of publication of application: 20.03.1996
(73) Proprietor: Ciba Specialty Chemicals Holding Inc., 4057 Basel (CH)
(72) Inventor: Bäbler, Fridolin Dr., Hockessin, DE 19707 (US)

(56) References cited:
- EP-A- 0 466 649
- EP-A- 0 604 370
- DE-A- 2 132 546
- DE-A- 2 202 143
- DE-A- 2 210 073
- US-A- 5 298 076

## Description

This application relates to a method of coloring high-molecular-weight organic materials with organic stir-in pigments or stir-in pigment compositions containing an organic pigment and an inorganic filler pigment, as well as said stir-in pigment compositions as such.

In general, after being mixed into an aqueous or solventborne resin system, an organic pigment must be further dispersed prior to its final application. This additional dispersion step generally requires that the pigment be dispersed for a period of 2 to 48 hours using milling equipment, such as a vertical or horizontal ball mill or an attritor mill with milling media, such as glass beads or stainless steel balls. Since this additional dispersion step is both time consuming and costly, the elimination of this step by using pigments that are adequately dispersed during a simple mixing step, herein referred to as stir-in pigments, is a great advantage.

A number of effect pigments are stir-in pigments which can be added to a coating or ink system without an additional dispersion step. In this application, the expression "effect pigment" means inorganic or organic pigments which show metallic, pearlescent and/or silky-luster effects. Such effect pigments are generally inorganic pigments such as metallics, like aluminum, TiO₂-coated mica pigments, platelet graphite and platelet molybdenum disulfide. Other effect pigments are prepared by coating a flaky crystalline form of a substrate with a small amount of a dyestuff or pigment, for example, a metal oxide coated mica. In addition, the effect pigments include certain platelet-shaped organic pigments, such as platelet copper phthalocyanine and those described in US 5,084,573, US 5,095,122, and US 5,347,014. However, no non-platelet-shaped organic stir-in pigments are described.

US 5,298,076 discloses the use of carbazole dioxazine crude of particular particle size and specific surface area as a multi-colored effect pigment for use in a variety of applications, including as a stir-in pigment. However, this publication does not suggest that other pigment crudes could also be utilized as stir-in pigments.

DE-A 2,202,143 discloses a process for the preparation of an easy to disperse laked azo pigment, laking being carried out in the presence of a water-soluble salt of a polymerized abietic acid and a water-soluble salt of a dialkyl ester of sulfosuccinic acid. However, the addition of special chemicals is necessary to improve the dispersability.

The present invention relates to the general discovery that organic pigments having particles with an average particle size within a specific range are useful as stir-in pigments. The invention further relates to the discovery that the range is somewhat broader if the organic pigment is combined with an inorganic filler to form a pigment composition.

Since the effect pigments that can be used as stir-in pigments are generally used in conjunction with very small particle size transparent organic pigments in the preparation of effect coatings, an additional dispersion step is necessary to prepare such coatings due to the presence of the aggregated, small-particle-size organic pigment. However, if the effect pigment is used in conjunction with a stir-in organic pigment or a pigment composition of the present invention, the costly additional dispersion step is avoided.

The inventive pigments and pigment compositions have an additional advantage over the small-particle-size organic pigments in coating and ink systems because relatively increased concentrations of the inventive pigments and/or pigment compositions do not adversely effect the viscosity behavior and gloss of the coating or ink system. Thus, the inventive pigments and pigment compositions are formulated into coating and ink systems using reduced amounts of organic solvents.

In addition, the inventive pigments and pigment compositions exhibit an excellent flop effect and in certain cases a silky effect. The term "flop effect" is generally used in this application to describe an effect wherein different color shades or hues are observed when viewing a pigmented object from different viewing angles.

Thus, the inventive pigments and pigment compositions are valuable because they are utilized as stir-in pigments, have excellent rheological and gloss properties and demonstrate an excellent flop effect.

A subject of the invention is a process for coloring a high-molecular-weight organic material, which comprises uniformly dispersing an effective pigmenting amount of a stir-in pigment in the high-molecular-weight organic material by stirring the stir-in pigment into a suspension or solution of the high-molecular-weight organic material; wherein the stir-in pigment is an organic stir-in pigment which is a pigment crude consisting essentially of non-platelet-shaped pigment particles having an average particle size in the range from 0.5 µm to 25 µm, which pigment crude is not carbazole dioxazine crude; or wherein the stir-in pigment is a pigment composition which comprises from 0.1 to 50 parts by weight of an inorganic filler pigment and from 50 to 99.9 parts by weight of an organic pigment, wherein the organic pigment has an average particle size in the range of from 0.01 µm to 25 µm, and wherein the sum of the parts by weight of the inorganic filler pigment and the organic pigment is 100. Since the stir-in pigment is adequately dispersed during the mixing step, no additional dispersion step is required.

In this application, the term "stirring" is intended to have its usual meaning, but is also intended to include any low-sheer-force mixing step, such as shaking.

The stir-in pigments of this invention possess outstanding dispersibility properties. This is believed to be due to the large pigment particle size and/or the presence of the inorganic filler pigment, as well as the presence of an optional texture-improving agent, and particularly the drying and pulverization processes described below. Thus, the pigments disperse easily when used as stir-in pigments.

Since the organic stir-in pigments and pigment compositions of this invention are simply added and stirred into a suspension or solution of the high-molecular-weight organic material, the inventive stir-in pigments avoid the costly energy and time consuming dispersion process that is normally required to uniformly disperse pigments in a coating or ink system. Additionally, since there is no additional milling step, there is no milling media to clean, which results in much less waste to dispose of. In general, the stirring simply involves blending the stir-in pigment into the solution or suspension of the high-molecular-weight organic material until a uniform dispersion is achieved. The blending is advantageously carried out by stirring the resulting pigment-resin suspension for from about 5 minutes to about 3 hours, preferably for from 10 to 30 minutes, by stirring methods known in the art, for example with a disk or propeller stirrer.

Since this invention is based on the finding that the particle size of the pigment is critical to its utility as a stir-in pigment, the present method is a general method applicable with any organic pigment, or preferably pigment crude, of the proper particle size.

Especially suitable classes of pigments and pigment crudes include the azo, azomethine, methine, anthraquinone, phthalocyanine, perinone, perylene, diketopyrrolopyrrole, thioindigo, iminoisoindoline, iminoisoindolinone, quinacridone, flavanthrone, indanthrone, anthrapyrimidine and quinophthalone pigments; in particular the diketopyrrolopyrrole, quinacridone, phthalocyanine, indanthrone or iminoisoindolinone pigments.

Notable pigments useful in the present process are those pigments identified in The Colour Index, including quinacridone pigments: C.I. Pigment Red 202, C.I. Pigment Violet 19, and C.I. Pigment Red 122; the perylene pigment: C.I. Pigment Red 179; the azo condensation pigments: C.I. Pigment Red 170, C.I. Pigment Red 144, and C.I. Pigment Brown 23; the isoindolinone pigments: C.I. Pigment Orange 61, C.I. Pigment Yellow 109, and C.I. Pigment Yellow 110; the diketopyrrolopyrrole pigments: C.I. Pigment Red 254, C.I. Pigment Red 255, C.I. Pigment Red 264, C.I. Pigment Orange 71, and C.I. Pigment Orange 73; the copper phthalocyanine pigment: C.I. Pigment Blue 15; and the anthraquinone pigments: C.I. Pigment Blue 60, C.I. Pigment Red 177 and C.I. Pigment Yellow 147, or the corresponding crude.

The organic pigments utilized in this invention are prepared by known synthesis and/or pigment conditioning processes. However, they are preferably used in the pigment crude form; pigment crude meaning the unconditioned, untreated form obtained from the last synthetic step. Pigments of the proper particle size and shape for use in the present process are prepared by drying the pigment presscake by methods known in the art. For example, the presscake of the pigment crude is fluidized bed, tray or spray dried. Subsequently, depending on the pigment particle size, the dried pigment, in particular the tray-dried pigment, is optionally micropulverized, for example with hammer mills or air-jet pulverizers.

The organic stir-in pigment of the present invention is preferably a pigment crude which preferably has an average particle size in the range from 2 to 15 µm. The range from 2.5 to 10 µm is especially suitable for the organic stir-in pigment. The term "average particle size" is used to indicate that the mean of the longest dimension of at least 50 percent of the particles are within the specified size range.

The organic stir-in pigment is not platelet-shaped. The expression "platelet-shaped" means thin, flat, flaky particles which are oblong, circular or square and have a length and width, or in the case of a circular or oval particle, a diameter or long and short diameters, of from 0.5 to 25 µm, and a thickness of up to one-tenth of the longest dimension. It is preferable for the organic stir-in pigment of the invention to consist essentially of irregular, isometric (cubic), needle or bar shaped particles. Bar-shaped means that the particle is generally rectangular with a length to width ratio of 2 or above and a thickness that is greater than one-tenth of the longest dimension.

In addition to the stir-in organic pigments, the present process also relates to the use of pigment compositions as stir-in pigments. The pigment compositions used in the present process comprise an inorganic filler pigment and an organic pigment having an average particle size in the range from 0.01µm to 25µm. The organic pigment preferably has an average particle size in the range from 0.1 µm to 3 µm. Based on the average particle size given above, the organic pigment is used in the form of a pigment crude or a conditioned pigment. In general, the pigment compositions used in the present process comprise from 50 to 99.9 parts by weight of the organic pigment and from 0.1 to 50 parts by weight of the inorganic filler pigment. Especially suitable pigment compositions comprise from 65 to 95 parts by weight of the organic pigment and from 5 to 35 parts of the inorganic filler pigment.

The expression "inorganic filler pigment" means a substantially transparent or semitransparent inorganic pigment. For example, mica, kaolin, talc and natural or synthetic silicas, e.g. glass, are well-known inorganic filler pigments that are suitable for use in the pigment compositions of the present invention.

Transparent micas are especially suitable for use as the inorganic filler pigment. Of the micas, muscovite, phlogopite, biolite and synthetic micas are most suitable.

Muscovite mica and talc are particularly suitable inorganic filler pigments.

The inorganic filler pigment is preferably used in its natural form but can include treated transparent inorganic filler pigments, for example a mica treated with a metal oxide. Mica pigments coated with TiO₂, ZrO₂, Fe₂O₃ and Cr₂O₃ are highly suitable treated inorganic filler pigments.

In general, the inorganic filler pigment has primary pigment particles having, for example, a flaky shape and an average particle size of 1.0 µm to 50 µm, especially from 0.2 µm to 35 µm, in particular from 1.2 µm to 30 µm. Inorganic filler pigments having a particle size smaller than the stated ranges are useful as long as they do not impair the stir-in properties of the pigment composition. Suitable inorganic fillers that are commercially available include POLYMICA 400 from Franklin Industrial Minerals, a muscovite mica, ULTRATALC®609 from Barrets Minerals Inc., a talc, and CANFIL®7 from Canada Talc Ltd., a talc.

The pigment compositions are generally prepared by conventional methods, for example, by mixing the individual components in the desired ratio as dry powders, or, preferably, by blending the aqueous presscake of the organic pigment together with the inorganic filler pigment in water and then isolating the pigment composition by filtration. The pigment composition is then dried, for example, by spray, fluidized bed, tray, spin flash or horizontal rotary vacuum drying, preferably spray, fluidized bed or tray drying, optionally followed by micropulverization or air-jet pulverization. Micropulverization means, for example, pulverization with a hammermill.

The pigment compositions used in the present process consist of the organic pigment and the inorganic filler pigment, or the pigment compositions additionally contain customary additives. Such customary additives include light stabilizers and texture-improving agents.

Useful light stabilizers are U.V. light absorbers, for example, benzotriazoles or hindered amine light stabilizers (HALS).

Texture-improving agents are especially useful as an additional component which can improve the properties of the stir-in pigment compositions. Suitable texture-improving agents include fatty acids having at least 12 carbon atoms, and amides, esters or salts of fatty acids. Typical fatty acid derived texture-improving agents include fatty acids such as stearic acid or behenic acid, and fatty amines such as lauryl amine, or stearylamine. In addition, polyols, such as aliphatic 1,2-diols or polyvinyl alcohol, and ethoxylated fatty alcohols, epoxidized soya bean oil, waxes, resin acids and resin acid salts, or a mixture thereof, are suitable texture-improving agents. Rosin acids and rosin acid salts are especially suitable texture-improving agents.
The texture-improving agent is incorporated into the composition before, during or after blending the organic pigment and the inorganic filler pigment. The texture-improving agent is preferably incorporated into the present composition in an amount of from 0.05 to 20 percent, most preferably 1 to 10 percent, by weight, based on the combined weights of the inorganic filler pigment and the organic pigment.
Pigments compositions which include a texture-improving agent are effectively prepared, for example, by a process which comprises (a) blending an aqueous suspension containing the inorganic filler pigment and the organic pigment with a water-soluble rosin acid salt; (b) precipitating an insoluble salt of the rosin acid by adding a salt of a divalent or trivalent metal to the suspension, and (c) then isolating a presscake of the pigment composition by filtering the suspension. The presscake obtained is then dried, for example spray-dried or tray-dried, and then optionally micropulverized to form the pigment composition of the present invention.
The spray drying is carried out according to procedures known in the art, preferably with aqueous pigment presscake slurries having a solid content above 22 percent, especially between 25 and 30 percent.
Thus, the present invention also relates to a pigment composition, obtainable by mixing the inorganic filler pigment and the organic pigment in the desired ratio as dry powders, or by blending the aqueous presscake of the organic pigment together with the inorganic filler pigment in water and then isolating the pigment composition by filtration, wherein the optional texture-improving agent is incorporated into the composition before, during or after blending the organic pigment and the inorganic filler pigment, which comprises (a) from 0.1 to 50 parts by weight of an inorganic filler pigment, (b) from 50 to 99.9 parts by weight of an organic pigment, wherein the organic pigment consists essentially of particles having an average particle size in the range of from 0.01 mm to 25 mm, and optionally also (c) from 0.05 to 20 parts by weight of a texture-improving agent, or a mixture of texture-improving agents, wherein the sum of the parts by weight of the inorganic filler pigment and the organic pigment is 100.
The organic pigment consists essentially of particles having an average particle size in the range of from 0.01 mm to 25 mm.
Preferably, the inorganic filler pigment is mica or talc, including mixtures thereof. Especially useful pigment compositions are those wherein the inorganic filler pigment is mica or talc and the organic pigment is a diketopyrrolopyrrole pigment.

Such a pigment composition wherein the inorganic filler pigment is mica or talc and the organic pigment is a pigment mixture consisting of from 1 to 99 percent by weight of a diketopyrrolopyrrole pigment and from 1 to 99 percent by weight of an azo, quinophthalone, anthraquinone, iminoisoindoline, iminoisoindolone, phthalocyanine or quinacridone pigment are especially useful pigment compositions of the present invention.

Other useful pigment compositions include those wherein the inorganic filler pigment is mica or talc and the organic pigment is C.I. Pigment Red 254, C.I. Pigment Red 255, C.I. Pigment Red 264 or C.I. Pigment Orange 73.

Other notable pigment compositions contain muscovite mica and a quinacridone pigment selected from the group consisting of C.I. Pigment Red 202, C.I. Pigment Red 122 and C.I. Pigment Violet 19, or the corresponding pigment crude.

Preferred pigment compositions are those wherein the texture-improving agent is rosin acid or a salt thereof.

Notable pigment compositions are those which comprise a muscovite mica and/or talc as the inorganic filler pigment and a diketopyrrolopyrrole and/or quinacridone pigment or pigment crude, or pigment solid solutions such as those described in US 4,783,540 or US 4,810,304, as the organic pigment.

Especially notable pigment compositions contain muscovite mica or talc and a diketopyrrolopyrrole of the formula 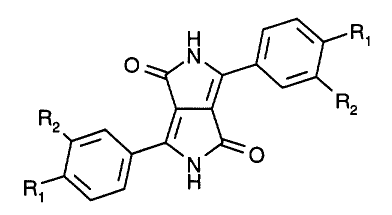 wherein R₁ is hydrogen, chlorine, bromine, cyano, methyl, ethyl, t-butyl or phenyl and R₂ is hydrogen, chlorine, methyl or cyano.

Pigments having the above formula are known in the art as 3,6-diaryl-1,4-diketopyrrolo[3,4-c]pyrrole or 1,4-diketo-3,6-diaryl-pyrrolo[3,4-c]pyrrole pigments and have also been called 3,6-diaryl-1,4-diketo-2,5-dihydro-pyrrolo[3,4-c]pyrrole or 3,6-diaryl-2,5-dihydro-pyrrolo[3,4-c]pyrrole-1,4-dione compounds in the chemical literature. They are usually referred to as diketopyrrolopyrrole or pyrrolopyrrole pigments in this application. Said pigments are disclosed e.g. in US 4,415,685 or in US 4,579,949.

In the present pigment compositions the inorganic filler pigment and organic pigment are mixed to form a substantially homogeneous blend. Due to the relatively small particle sizes of the components and particularly due to the presence of a texture-improving agent, the present pigment compositions possess excellent shelf life and transportation stability.

Generally, an effective pigmenting amount of the stir-in pigment is incorporated into the high-molecular-weight organic material to be pigmented. An effective pigmenting amount is any amount suitable to provide the desired color in the high-molecular-weight organic material. In particular, the stir-in pigments are used in an amount of 0.01 to 30% by weight, preferably 0.1 to 10% by weight, based on the weight of the high-molecular-weight organic material to be pigmented.

The pigmented, high-molecular-weight organic materials which are colored according to the present process are useful in a variety of applications. For example, the high-molecular-weight organic material can be used for the pigmentation of lacquers, inks and enamel coating compositions. The pigmented high-molecular-weight organic materials prepared according to the present invention are particularly useful for preparing automotive coating paints.

The high-molecular-weight organic materials which are colored according to the present process are, for example, cellulose ethers, cellulose esters, polyurethanes, polyesters, polycarbonates, polyolefins, polystyrene, polysulfones, polyamides, polycycloamides, polyimides, polyethers, polyether ketones, polyvinyl halides, polytetrafluoroethylene, acrylic and methacrylic polymers, rubber, silicone polymers, phenol/formaldehyde resins, melamine, formaldehyde resins, urea/formaldehyde resins, epoxy resins and diene rubbers or copolymers thereof.

High-molecular-weight organic materials which are useful for heat-curable or crosslinked coatings, for example chemically-reactive coatings, are also colored according to the present process. The pigmented, high-molecular-weight organic materials prepared according to the present process are especially useful in stoving finishes which contain the customary binders and which are reactive at high temperature. Examples of the high-molecular-weight organic materials which are used in such coatings include acrylic, alkyd, epoxy, phenolic, melamine, urea, polyester, polyurethane, blocked isocyanate, benzoguanamine or cellulose ester resins, or combinations thereof. The pigmented, high-molecular-weight organic materials prepared according to the present process are also useful as air-drying or physically-drying coatings, for example, conventional lacquers such as those used in the cosmetics industry as nail varnishes, for example nitrocellulose lacquers.

The present process is particularly suitable for preparing pigmented coatings conventionally employed in the automobile industry, especially acrylic/melamine resin, alkyd/melamine resin or thermoplastic acrylic resin systems, as well as in aqueous-based coating systems.

Coatings and ink systems colored by the present process possess excellent heat, light and weatherfastness, as well as bleed and overspraying fastness properties.

Due to the excellent dispersibility behavior of the stir-in pigments of this invention, uniform distribution of pigment particles throughout the entire application media is achieved. Compositions containing the present stir-in pigments show excellent rheological behavior.

The present stir-in pigments are used alone or in the presence of other pigments or dyes. It is especially suitable to color the high-molecular-weight organic material with the present stir-in pigments in conjunction with an effect pigment.

The color effect and shade are varied by varying the kind of the effect pigment and the concentrations of the effect pigment and the stir-in pigment of the present invention. Particularly striking effect shades are generated by using the stir-in pigments with known transparent titanium dioxide-coated mica pigments.

The pigment compositions can be used alone or in conjunction with other pigments or dyes. The pigment compositions are particularly suitable for preparing interesting high-chroma solid enamel shades. Exceptionally pure high-chroma shades are created using diketopyrrolopyrrole pigments like C.I. Pigment Red 254 (3,6-di(4-chlorophenyl)-1,4-diketopyrrolo[3,4-c]pyrrole) or C.I. Pigment Red 255 (3,6-diphenyl-1,4-diketopyrrolo[3,4-c]pyrrole or quinacridone pigments such the beta and gamma form of the unsubstituted quinacridone as the organic pigment component. The resulting enamel possesses high opacity, saturation and excellent light and weatherfastness properties. Especially useful pigment compositions contain mica and/or talc as the inorganic filler pigment and C.I. Pigment Red 254 as the organic pigment.

The following examples further describe the embodiments of the invention, but do not limit the scope of the invention. In the examples, all parts are by weight unless otherwise indicated.

### Example 1A: Preparation of an isoindolinon stir-in pigment

500 grams of an aqueous pigment presscake containing bis-(4,5,6,7-tetrachloroisoindolin-1-on-3-ylidene)-phenylene-1,4-diamine pigment crude is tray dried in an oven at 80-100°C. The dried pigment is micropulverized in an assemble micropulverizer (The BANTAM®, type G-90 from American Marietta Company) using a 0,12 cm (0.047 inch) round hole screen and a rotating speed of 7000 RPM, yielding 130 grams of yellow isoindolinone pigment consisting of primary pigment particles having a bar-shaped pigment form, wherein the particles have a length in the range of 0.5 to 2.7 µm as determined by electron microscopy.

### Examples 1B to 1D: Incorporation of the isoindolinon pigment prepared in Example 1A into an acrylic/melamine base/clearcoat system.

Preparation of the resin solutions:

### I. Solid clear solution

The following ingredients are stirred together to provide a "solid clear solution" containing 57.53% solids:
1171 grams of a nonaqueous dispersion resin (NAD-resin),
719.1 grams of a melamine resin,
269.4 grams of a solvent mixture of aliphatic and aromatic hydrocarbons (SOLVESSO100 distributed by American Chemical),
597.6 grams of polyester urethane resin,
125.1 grams of a catalyst solution, and
120 grams of butanol.

### II. Metallic clear solution

The following ingredients are stirred together to provide a "metallic clear solution" containing 59.2% solids:
1353.0 grams of a nonaqueous dispersion resin,
786.2 grams of melamine resin,
144.6 grams of xylene,
65.6 grams of UV Screener Solution,
471.6 grams of acrylourethane resin,
89.0 grams of catalyst solution, and
90.0 grams of methanol.

### III. Mica dispersion

The following ingredients are stirred together to provide a mica dispersion containing 27.9% pearlescent mica pigment and a total solid content of 69.1% solids:
251.1 grams of bright white mica, EXTERIOR MEARLIN® from The Mearl Corp.,
315.0 grams of NAD-resin, and
180.0 grams of acrylourethane resin.

### IV. Stir-in pigment dispersion

The following ingredients are stirred together in an 0,284 dm³ (1/2 pint) can:
66.0 grams of acrylourethane resin,
14.5 grams of AB-dispersant, and
58.1 grams of SOLVESSO 100.

26.4 grams of the isoindolinone pigment obtained according Example 1A are then added to the above resin/solvent-mixture as a stir-in pigment. The yellow pigment dispersion is stirred with a disc or propeller stirrer at slow to medium speed for 15 to 20 minutes, providing a homogeneous non-viscous stir-in pigment dispersion containing 16.0% yellow isoindolinone pigment, a total solid content of 48% solids in a pigment to binder ratio of 0.5.

### V. TiO₂-dispersion

A TiO₂ dispersion is prepared by mixing the following ingredients in a quart can:
604.1 grams of a TiO₂ pigment,
129.8 grams of acrylourethane resin, and
161.1 grams of SOLVESSO 100.

0,568 dm³ (1 pint) of 1,27 cm (1/2") ceramic balls are then added. The dispersion is then milled for 24 hours. The white pigment dispersion is separated from the balls yielding a "TiO2-dispersion" containing 67.5% pigment with a total solids contents of 77.4%.

### Example 1B: Masstone color shade

53.5 grams "stir-in pigment dispersion IV" and 76.5 grams "solid clear solution I" are combined with stirring. The yellow resin/pigment dispersion is sprayed onto a panel twice in a 1.5 minute interval as a basecoat. After 2 minutes, clearcoat resin is sprayed twice at 1 1/2 minute intervals onto the basecoat. The sprayed panel is then flashed with air in a flash cabinet for 30 minutes and then "baked" in an oven at 121 ºC (250°F) for 30 minutes, yielding a reddish-yellow colored panel with excellent weatherability. A microscopic evaluation shows a homogeneous distribution of the pigment particles in the coating system.

### Example 1C: 80/20 White mica shade

| | |
|---|---|
| 46.1 grams | "stir-in pigment dispersion IV" |
| 6.6 grams | "mica dispersion III" |
| 6.9 grams | NAD-resin, |
| 70.4 grams | "metallic clear solution II" |

The yellow pigment/pearlescent mica/resin dispersion is sprayed onto a panel followed by a clearcoat as described in Example 1B. A yellow color effect paint which shows a reddish flop and excellent weatherability is obtained. The pigment particles are homogeneously distributed in the coating system. Additionally, the paint shows a high gloss.

### Example 1D: 50/50 White mica shade

| | |
|---|---|
| 29.9 grams | "stir-in pigment dispersion IV", |
| 17.1 grams | "mica dispersion III", |
| 6.4 grams | acrylourethan resin, |
| 3.6 grams | NAD resin, |
| 73.0 grams | "metallic clear solution II". |

The yellow pigment/pearlescent mica/resin dispersion is sprayed onto a panel followed by a clearcoat as described in Example 1B. A yellow color effect paint which shows a strong reddish flop and excellent weatherability and gloss properties is obtained. The pigment particles are homogeneously distributed in the coating system.

### Example 1E: 10/90 Tint shade

| | |
|---|---|
| 7.7 grams | "stir-in pigment dispersion IV", |
| 16.4 grams | "TiO₂-dispersion V", |
| 14.3 grams | acrylourethane resin, |
| 61.6 grams | "solid clear solution I" |

The yellow pigment/TiO₂/resin dispersion is sprayed onto a panel followed by a clearcoat as described in Example 1B, yielding a high gloss yellow tinted panel in which the pigment particles are homogeneously dispersed.

### Example 2A: Preparation of a 2,9-dichloroquinacridone stir-in pigment

500 grams of an aqueous presscake containing 2,9-dichloroquinacridone crude is tray dried in an oven at 80-100°C. The dried presscake is micropulverized in an assemble micropulverizer (The BANTAM®, type G-90 from American Marietta Company) using a 0,16 cm (0.062 inch) roundhole screen and a rotating speed of 7000 RPM to yield 280 grams of a magenta pigment consisting of primary pigment particles having a needle prismatic pigment particle form, wherein the length of the pigment particles is in the range from 0.5 to 3.5 µm as determined by electron microscopy.

Example 2B: The procedure described in Example 1B is repeated using the 2,9-dichloroquinacridone obtained according to Example 2A as the pigment in the "stir-in pigment dispersion IV". The procedure yields a strongly colored magenta panel, which shows a fine silky appearance and in which the pigment is homogeneously dispersed in the coating system.

Example 2C: The procedure described in Example 1C is repeated using the 2,9-dichloroquinacridone obtained according to Example 2A as pigment in the "stir-in pigment dispersion IV". The procedure yields a magenta-colored effect paint showing a fine bluish luster effect. The 2,9-dichloroquinacridone pigment and the pearlescent mica pigment are homogeneously distributed in the coatings system.

Example 2D: The procedure described in Example 1D is repeated using the 2,9-dichloroquinacridone obtained according to Example 2A as pigment in the "stir-in pigment dispersion IV". The procedure yields a magenta-colored effect paint which shows a very strong bluish flop.

### Example 3A: Preparation of a bet copper phthalocanine stir-in pigment

200 grams of a large particle size crude beta copper phthalocyanine pigment is micropulverized twice in an assemble micropulverizer (The BANTAM®, type G90 from American Marietta Company) using a 0,05 cm (0.020 inch) round hole screen and a rotator speed of 14,000 RPM, yielding a pigment consisting of primary pigment particles having a needle prismatic shape with a length in the range of 1 to 15 µm.

Example 3B: The procedure of Example 1B is repeated using the copper phthalocyanine pigment obtained according to Example 3A as a pigment in the "stir-in pigment dispersion IV". The procedure yields a strongly colored dark-blue panel with a slight violet flop and a very fine silky appearance. The pigment is homogeneously dispersed in the coating system.

Example 3C: The procedure described in Example 1C is repeated using the copper phthalocyanine pigment obtained according to Example 3A as pigment in the "stir-in pigment dispersion IV". The procedure yields a blue-colored effect paint showing strong flop from blue to greenish blue. The coating has an excellent gloss and outstanding weatherability.

Example 3D: The procedure described in Example 1D is repeated using the copper phthalocyanine pigment obtained according to Example 3A as the pigment in the "stir-in pigment dispersion IV". The procedure yields a blue-colored effect paint which shows a strong flop from reddish to greenish blue. The coating has an excellent gloss and outstanding weatherability properties.

### Example 4: Indanthrone blue stir-in pigment

The procedure in Example 1C is repeated using an indanthrone blue pigment crude with primary pigment particles having a needle shape particle form, wherein the needles have a length in the range from 0.2 to 5 µm, as a pigment in the "stir-in pigment dispersion IV". The procedure yields a strongly blue-colored effect paint with excellent gloss and weatherability.

### Example 5: Anthraquinone yellow stir-in pigment

The procedure in Example 1B is repeated using the crude of anthraquinone pigment, C.I. Pigment Yellow 147, consisting of primary pigment particles having a bar shaped form, wherein the bars have a length in the range of 0.2 to 4.5 µm determined by electron microscopy, as a pigment in the "stir-in pigment dispersion IV". The procedure yields a strongly-colored yellow panel. The pigment is homogeneously distributed in the paint coating system.

### Example 6A: Preparation of a diketopyrrolopyrrole stir-in pigment

250 ml water, 100 grams aqueous presscake containing 35 grams 3,6-di(4-chlorophenyl)-1,4-diketopyrrolo[3,4-c]-pyrrole pigment crude consisting of primary pigment particles having an isometric shape with a particle size in the range from 0.2 to 0.5 µm determined by electron microscopy, 15 grams of a muscovite mica with an average particle size of 18.5 µm and 1.5 grams of a sodium salt of a rosin (DRESINATE®X from HERCULES Corp.) dissolved in 40ml of water are blended together to form a homogeneous suspension. 0.5 grams of calcium chloride dissolved in 30 ml water are added to the stirred suspension, precipitating the calcium salt of the rosin. The resulting uniform red pigment suspension is filtered. The presscake is washed with water until salt-free and subsequently tray dried in an oven at 80-100°C. The procedure yields 51 grams of a pigment composition containing 2.9% Ca salt of rosin, 29.0% mica and 68.1% diketopyrrolopyrrole pigment. The pigment composition is micropulverized in an assemble micropulverizer (The BANTAM®, type G90 from American Marietta Company) using a 0,1 cm (0.039 inch) round hole screen and a rotating speed of 7000 RPM.

Example 6B: The procedure described in Example 1B is repeated using the pigment composition obtained according to Example 6A as the pigment in the "stir-in pigment suspension IV". A uniform pigment resin dispersion having excellent viscosity is obtained. The pigment dispersion is sprayed onto panels as described in Example1B, yielding a highly saturated strong red-colored panel with excellent weatherability.

Example 6C: The procedure described in Example 1C is repeated using the pigment composition obtained according to Example 6A as the pigment in the "stir-in pigment dispersion IV". The procedure yields a red-colored, highly saturated effect paint. The coating has excellent gloss properties and outstanding weatherability. The pigments are homogeneously dispersed in the coating systems.

Example 6D: The procedure described in Example 1D is repeated using the pigment composition obtained according to Example 6A as a pigment in the "stir-in pigment dispersion IV". The procedure yields a highly saturated, red-colored effect paint, which shows a strong flop from red to bluish red. The coating exhibits excellent gloss and shows outstanding weatherability.

Example 7A: The procedure of Example 6A is repeated using an aqueous pigment presscake containing 39 grams 3,6-di(4-chlorophenyl)-1,4-diketopyrrolo-[3,4-c]-pyrrole pigment crude and 11 grams of a muscovite mica, yielding 50.6 grams of a pigment composition containing 2.9% Ca salt of rosin, 21.4% mica and 75.7% diketopyrrolopyrrole pigment.

Example 7B: The procedure described in Example 6C is repeated using the pigment composition obtained according to Example 7A as the pigment in the "stir-in pigment dispersion IV". The procedure yields a red-colored, highly saturated effect paint of similar good properties.

### Example 8A: Preparation of a γ-quinacridone stir-in pigment

The procedure of Example 6A is repeated using an aqueous pigment presscake containing 35 grams γ-quinacridone pigment (MONASTRAL Red Y RT-759-D from Ciba) consisting of primary pigment particles having an isometric shape with a particle size in the range from 0.1 to 0.6µm. The procedure yields a pigment composition containing 2.9% Ca salt of rosin, 29.0% mica and 68.1% quinacridone pigment.

Example 8B: The procedure described in Example 1B is repeated using the pigment composition obtained according to Example 8A as pigment in the "stir-in pigment suspension IV". The procedure yields a uniformly colored red panel with excellent weatherability.

Example 8C: The procedure of Example 1 D is repeated using the pigment composition obtained according to Example 8A as the pigment in the "stir-in pigment dispersion IV". The procedure yields a highly saturated bluish-red colored effect paint which shows a bluish flop.

Example 9A: 252.3 grams of an aqueous presscake containing 98.4 grams of 3,6-di(4-chlorophenyl)-1,4-diketopyrrolo[3,4-c]pyrrole pigment crude consisting of primary pigment particles having an isometric shape with a particle size in the range from 0.2 to 0.5 µm determined by electron microscopy, 21.6g of a talc with an average particle size of around 0.8 µm and 3.6 grams of a sodium salt of a rosin (DRESINATE®X from Hercules Corp.), which is dissolved in 40 ml of water, are then blended in a blender equipped with a 4 liter stainless steel container, together with an additional 500 to 700 ml of water. The resulting homogenous pigment suspension is transferred into a 4 liter beaker and stirred at ambient temperature for 15 minutes. A solution of 1.2 grams calcium chloride in 30ml water is added and the pH is adjusted to 5.0 to 5.5 by the addition of dilute hydrochloric acid. The resulting bright red pigment suspension is stirred for 45 minutes at pH 5.0 and then filtered. The presscake is washed with water until salt-free and then tray dried in an oven at 80-100°C. The procedure yields 121 grams of a pigment composition containing 2.9% Ca salt of rosin, 17.5% talc and 79.6% diketopyrrolopyrrole pigment. The pigment composition is micropulverized in an assemble micropulverizer using a 0,1 cm (0.039 inch) round hole screen a rotating speed of 7000 RPM.

Example 9B: The procedure described in Example 1 B is repeated using the pigment composition obtained according to Example 9A as the pigment in the "stir-in pigment suspension IV". A uniform pigment resin dispersion having excellent viscosity is obtained. The pigment dispersion is sprayed onto panels as described in Example 1B, yielding a highly saturated strongly colored red panel with excellent weatherability.

Example 10A: The procedure described in Example 9A is repeated using an aqueous pigment presscake containing 98.4 grams of the diketopyrrolopyrrole pigment, C.I. Pigment Red 255 (®IRGAZIN DPP SCARLET EK from Ciba), yielding 120.5 grams of a red pigment composition containing 2.9% Ca salt of rosin, 17.5% talc and 79.6% diketopyrrolopyrrole pigment.

Example 10B: The procedure described in Example 9B is repeated using the pigment composition obtained according to Example 10A as the pigment in the "stir-in pigment suspension IV" yielding a highly-saturated scarlet-red colored panel with excellent weatherability.

Example 11A: The procedure described in Example 9A is repeated using an aqueous pigment presscake containing 98.4 grams of 3,6-di(4-biphenyl)-1,4-diketopyrrolo[3,4-c]pyrrole with a particle size in the range of 0.1 to 0.2 µm, and 21.6 grams of a talc with an average particle size of around 7 µm instead of 0.8 µm, yielding a red pigment composition consisting of 2.9% Ca salt of rosin, 17.5% talc and 79.6% diketopyrrolopyrrole pigment.

Example 11B: The procedure described in Example 9B is repeated using the pigment composition obtained according to Example 11A as the pigment in the "stir-in pigment suspension IV" yielding a highly-saturated strongly colored bluish-red panel with excellent weatherability.

Example 12A: The procedure described in Example 11A is repeated using an aqueous pigment presscake containing 98.4 grams of 3,6-di (4-tert-butylphenyl) -1,4-diketopyrrolo[3,4-c]pyrrole crude, yielding a orange pigment composition containing 2.9% Ca salt of rosin, 17.5% talc and 79.6% diketopyrrolopyrrole pigment.

Example 12B: The procedure described in Example 9B is repeated using the pigment composition obtained according to Example 12A as the pigment in the "stir-in pigment suspension IV" yielding a highly-saturated very strongly colored orange panel with excellent weatherability.

Example 13A: The procedure of Example 9A is repeated using an aqueous presscake containing 49.2 grams of 3,6-di(4-biphenyl)-,4-diketopyrrolo[3,4-c]pyrrole crude and an aqueous presscake containing 49.2 grams of γ-quinacridone (MONASTRAL RED Y RT-759-D from Ciba) yielding a red pigment composition consisting of 2,9% Ca salt of rosin, 17.5% talc and 79.6% diketopyrrolopyrrole/quinacridone pigment mixture.

Example 13B: The procedure described in Example 9B is repeated using the pigment composition obtained according to Example 12A as the pigment in the "stir-in pigment suspension IV" yielding highly saturated red colored panels with excellent weatherability.

### Example 14A:

An aqueous pigment presscake containing 22% of the pigment composition prepared according to Example 6A is spray dried in a pilot plant spray dryer (THE BOWEN BLS from Bowen) instead of tray-dried to yield a red organic stir-in pigment with similar coloristic and application properties as the stir-in pigment composition obtained according to Example 6A by tray-drying and micropulverization.

In addition to the embodiments described above, numerous variations of these embodiments can be made in accordance with this invention.

## Claims

1. A process for coloring a high-molecular-weight organic material, which comprises uniformly dispersing an effective pigmenting amount of a stir-in pigment in the high-molecular-weight organic material by stirring the stir-in pigment into a suspension or solution of the high-molecular-weight organic material; wherein the stir-in pigment is an organic stir-in pigment which is a pigment crude consisting essentially of non-platelet-shaped pigment particles having an average particle size in the range from 0.5 µm to 25 µm, which pigment crude is not carbazole dioxazine crude; or wherein the stir-in pigment is a pigment composition which comprises from 0.1 to 50 parts by weight of an inorganic filler pigment and from 50 to 99.9 parts by weight of an organic pigment, wherein the organic pigment has an average particle size in the range of from 0.01 µm to 25 µm, and wherein the sum of the parts by weight of the inorganic filler pigment and the organic pigment is 100.

2. A process of claim 1, wherein the organic stir-in pigment or the organic pigment is an azo, azomethine, methine, anthraquinone, phthalocyanine, perinone, perylene, diketopyrrolopyrrole, thioindigo, iminoisoindoline, iminoisoindolinone, quinacridone, flavanthrone, indanthrone, anthrapyrimidine or quinophthalone pigment crude, preferably a diketopyrrolopyrrole, quinacridone, anthraquinone, phthalocyanine, indanthrone or iminoisoindolinone pigment crude pigment.

3. A process of claim 1, wherein the organic stir-in pigment or the pigment composition is prepared from its presscake by spray-drying or fluidized-bed drying.

4. A process of claim 1, wherein the organic stir-in pigment or the pigment composition is prepared from its presscake by spray-drying, fluidized-bed drying or tray-drying followed by micropulverization.

5. A process of claim 1, wherein the organic stir-in pigment or the organic pigment is selected from the group consisting of C.I. Pigment Red 202, C.I. Pigment Violet 19, C.I. Pigment Red 122, C.I. Pigment Red 179, C.I. Pigment Red 170, C.I. Pigment Red 177, C.I. Pigment Red 144, C.I. Pigment Brown 23, C.I. Pigment Orange 61, C.I. Pigment Red 254, C.I. Pigment Red 255, C.I. Pigment Red 264, C.I. Pigment Yellow 109, C.I. Pigment Yellow 110, C.I. Pigment Blue 15, C.I. Pigment Blue 60, C.I. Pigment Orange 73 and C.I. Pigment Orange 71 or the corresponding pigment crude.

6. A process of claim 1, wherein the organic stir-in pigment has an average particle size in the range from 2 µm to 15 µm, preferably in the range from 2.5 µm to 10 µm.

7. A process of claim 1, wherein the organic stir-in pigment consists essentially of irregular, cubic, needle or bar shaped particles.

8. A process of claim 1, wherein the organic pigment has an average particle size in the range from 0.1 µm to 3 µm.

9. A process of claim 1, wherein the pigment composition comprises from 65 to 95 parts by weight of the organic pigment and from 5 to 35 parts by weight of the inorganic filler pigment.

10. A process of claim 1, wherein the inorganic filler pigment is selected from the group consisting of mica, kaolin, talc and a natural or synthetic silica, and preferably from the group consisting of a natural muscovite-type mica, talc, or a mixture thereof.

11. A process of claim 10, wherein said mica pigment is a metal oxide coated mica, the metal oxide being preferably TiO₂, ZrO₂, Fe₂O₃ or Cr₂O₃, or a mixture thereof.

12. A process of claim 1, wherein the inorganic filler pigment has an average particle size in the range from 1.0 µm to 50 µm, preferably in the range from 1.2 µm to 30 µm.

13. A process of claim 1, wherein the pigment composition further comprises from 0.05 to 20 parts by weight, preferably from 1 to 10 parts by weight, of a texture-improving agent selected from the group consisting of fatty acids having at least 12 carbon atoms, or amides, esters or salts thereof, aliphatic 1,2-diols, epoxidized soya bean oil, ethoxylated fatty alcohols, waxes, resin acids and resin acid salts, or a mixture thereof, preferably a rosin acid or a rosin acid salt, most preferably a water-insoluble rosin acid salt.

14. A process of claim 1, wherein the high-molecular-weight organic material is a coating or an ink system selected from the group consisting of cellulose ethers, cellulose esters, polyurethanes, polyesters, polycarbonates, polyolefins, polystyrene, polysulfones, polyamides, polycycloamides, polyimides, polyethers, polyether ketones, polyvinyl halides, polytetrafluoroethylene, acrylic and methacrylic polymers, rubber, silicone polymers, phenol/formaldehyde resins, melamine/formaldehyde resins, urea/formaldehyde resins, epoxy resins, diene rubbers and copolymers thereof.

15. A process of claim 1, wherein the high-molecular-weight organic material is a heat-curable or crosslinkable reactive coating system, which is preferably an acrylic alkyd, epoxy, phenolic, melamine, urea, polyester, polyurethane, blocked isocyanate, benzoguanamine or cellulose ester resin, or a combination thereof or which is a solvent or waterborne coating system which is an acrylic/melamine, alkyd/melamine or thermoplastic acrylic resin.

16. A stir-in pigment composition, obtainable by mixing the inorganic filler pigment and the organic pigment in the desired ratio as dry powders, or by blending the aqueous presscake of the organic pigment together with the inorganic filler pigment in water and then isolating the pigment composition by filtration, wherein the optional texture-improving agent is incorporated into the composition before, during or after blending the organic pigment and the inorganic filler pigment, which comprises
(a) from 0.1 to 50 parts by weight of an inorganic filler pigment,
(b) from 50 to 99.9 parts by weight of an organic pigment, wherein the organic pigment consists essentially of particles having an average particle size in the range of from 0.01 mm to 25 mm, and optionally also
(c) from 0.05 to 20 parts by weight of a texture-improving agent;
wherein the sum of the parts by weight of the inorganic filler pigment and the organic pigment is 100.

17. A stir-in pigment composition of claim 16 wherein the inorganic filler pigment is mica or talc and wherein prefeably the organic pigment is a diketopyrrolopyrrole pigment.

18. A stir-in pigment composition of claim 16 wherein the organic pigment is a pigment mixture consisting of from 1 to 99 percent by weight of a diketopyrrolopyrrole pigment and from 1 to 99 percent by weight of an azo, quinophthalone, anthraquinone, iminoisoindoline, iminoisoindolone, phthalocyanine or quinacridone pigment.

19. A stir-in pigment composition of claim 16 wherein the inorganic filler pigment is mica or talc and the organic pigment is C.I. Pigment Red 254, C.I. Pigment Red 255, C.I. Pigment Red 264 and C.I. Pigment Orange 73.

20. A stir-in pigment composition of claim 16 wherein the organic pigment is C.I. Pigment Red 202, C.I. Pigment Red 122 or C.I. Pigment Violet 19 or the corresponding pigment crude.

## Patentansprüche

1. Verfahren zum Färben eines organischen Materials mit hohem Molekulargewicht, das gleichförmiges Dispergieren einer wirksam pigmentierenden Menge eines Stir-in-Pigments in dem organischen Material mit hohem Molekulargewicht durch Rühren des Stir-in-Pigments in eine Suspension oder Lösung des organischen Materials mit hohem Molekulargewicht umfasst, wobei das Stir-in-Pigment ein organisches Stir-in-Pigment darstellt, das ein Pigmentrohstoff ist, der im wesentlichen aus nicht plättchenförmigen Pigmentteilchen mit einer mittleren Teilchengröße im Bereich von 0,5 µm bis 25 µm besteht, wobei der Pigmentrohstoff nicht Carbazoldioxazinrohstoff ist oder wobei das Stir-in-Pigment eine Pigmentzusammensetzung ist, die 0,1 bis 50 Gewichtsteile eines anorganischen Füllstoffpigments und 50 bis 99,9 Gewichtsteile eines organischen Pigments umfasst, wobei das organische Pigment eine mittlere Teilchengröße im Bereich von 0,01 µm bis 25 µm aufweist und wobei die Summe der Gewichtsteile des anorganischen Füllstoffpigments und des organischen Pigments 100 ist.

2. Verfahren nach Anspruch 1, wobei das organische Stir-in-Pigment oder das organische Pigment ein Azo-, Azomethin-, Methin-, Anthrachinon-, Phthalocyanin-, Perinon-, Perylen-, Diketopyrrolopyrrol-, Thioindigo-, Iminoisoindolin-, Iminoisoindolinon-, Chinacridon-, Flavanthron-, Indanthron-, Anthrapyrimidin- oder Chinophthalon-Pigmentrohstoff, vorzugsweise ein Diketopyrrolopyrrol-, Chinacridon-, Anthrachinon-, Phthalocyanin-, Indanthron- oder Iminoisoindolinonpigment-Rohpigment ist.

3. Verfahren nach Anspruch 1, wobei das organische Stir-in-Pigment oder die Pigmentzusammensetzung aus seinem Presskuchen durch Sprühtrocknen oder Wirbelschichttrocknen hergestellt wird.

4. Verfahren nach Anspruch 1, wobei das organische Stir-in-Pigment oder die Pigmentzusammensetzung aus ihrem Presskuchen durch Sprühtrocknen, Wirbelschichttrocknen oder Plattentrocknen, gefolgt von Mikropulverisierung, hergestellt wird.

5. Verfahren nach Anspruch 1, wobei das organische Stir-in-Pigment oder das organische Pigment aus der Gruppe, bestehend aus C.I. Pigment Red 202, C.I. Pigment Violet 19, C.I. Pigment Red 122, C.I. Pigment Red 179, C.I. Pigment Red 170, C.I. Pigment Red 177, C.I. Pigment Red 144, C.I. Pigment Brown 23, C.I. Pigment Orange 61, C.I. Pigment Red 254, C.I. Pigment Red 255, C.I. Pigment Red 264, C.I. Pigment Yellow 109, C.I. Pigment Yellow 110, C.I. Pigment Blue 15, C.I. Pigment Blue 60, C.I. Pigment Orange 73 und C.I. Pigment Orange 71 oder dem entsprechenden Pigmentrohstoff, ausgewählt ist.

6. Verfahren nach Anspruch 1, wobei das organische Stir-in-Pigment eine mittlere Teilchengröße im Bereich von 2 µm bis 15 µm, vorzugsweise im Bereich von 2,5 µm bis 10 µm, aufweist.

7. Verfahren nach Anspruch 1, wobei das organische Stir-in-Pigment im wesentlichen aus unregelmäßigen, würfelförmigen, nadelförmigen oder stabförmigen Teilchen besteht.

8. Verfahren nach Anspruch 1, wobei das organische Pigment eine mittlere Teilchengröße im Bereich von 0,1 µm bis 3 µm aufweist.

9. Verfahren nach Anspruch 1, wobei die Pigmentzusammensetzung 65 bis 95 Gewichtsteile des organischen Pigments und 5 bis 35 Gewichtsteile des anorganischen Füllstoffpigments umfasst.

10. Verfahren nach Anspruch 1, wobei das anorganische Füllstoffpigment aus der Gruppe, bestehend aus Glimmer, Kaolin, Talkum und einem natürlichen oder synthetischen Siliziumdioxid und vorzugsweise aus der Gruppe, bestehend aus natürlichem Glimmer vom Muskovittyp, Talkum oder einem Gemisch davon, ausgewählt ist.

11. Verfahren nach Anspruch 10, wobei das Glimmerpigment ein mit Metalloxid beschichteter Glimmer ist, wobei das Metalloxid vorzugsweise TiO₂, ZrO₂, Fe₂O₃ oder Cr₂O₃ oder ein Gemisch davon ist.

12. Verfahren nach Anspruch 1, wobei das anorganische Füllstoffpigment eine mittlere Teilchengröße im Bereich von 1,0 µm bis 50 µm, vorzugsweise im Bereich von 1,2 µm bis 30 µm, aufweist.

13. Verfahren nach Anspruch 1, wobei die Pigmentzusammensetzung weiterhin 0,05 bis 20 Gewichtsteile, vorzugsweise 1 bis 10 Gewichtsteile, eines Textur-verbessernden Mittels, ausgewählt aus der Gruppe, bestehend aus Fettsäuren mit mindestens 12 Kohlenstoffatomen oder Amiden, Estern oder Salzen davon, aliphatischen 1,2-Diolen, epoxidiertem Sojabohnenöl, ethoxylierten Fettalkoholen, Wachsen, Harzsäuren und Harzsäuresalzen oder einem Gemisch davon, vorzugsweise einer Kolophoniumsäure oder einem Kolophoniumsäuresalz, besonders bevorzugt einem wasserunlöslichen Kolophoniumsäuresalz, umfasst.

14. Verfahren nach Anspruch 1, wobei das organische Material mit hohem Molekulargewicht eine Beschichtung oder ein Druckfarbensystem, ausgewählt aus der Gruppe, bestehend aus Celluloseethern, Celluloseestern, Polyurethanen, Polyestern, Polycarbonaten, Polyolefinen, Polystyrol, Polysulfonen, Polyamiden, Polycycloamiden, Polyimiden, Polyethern, Polyetherketonen, Polyvinylhalogeniden, Polytetrafluorethylen, Acryl- und Methacrylsäurepolymeren, Kautschuk, Silikonpolymeren, Phenol/Formaldehydharzen, Melamin/Formaldehydharzen, Harnstoff/Formaldehydharzen, Epoxidharzen, Dienkautschuken und Copolymeren davon, ist.

15. Verfahren nach Anspruch 1, wobei das organische Material mit hohem Molekulargewicht ein Wärme-härtbares oder vernetzbares reaktives Beschichtungssystem ist, das vorzugsweise ein Acryl-, Alkyd-, Epoxid-, Phenol-, Melamin-, Harnstoff-, Polyester-, Polyurethan-, blockiertes Isocyanat-, Benzoguanamin- oder Celluloseesterharz oder eine Kombination davon ist, oder das ein Beschichtungssystem auf Lösungsmitteloder Wasserbasis darstellt, das ein Acryl/Melamin-, Alkyd/Melamin- oder thermoplastisches Acrylharz darstellt.

16. Stir-in-Pigmentzusammensetzung, erhältlich durch Mischen des anorganischen Füllstoffpigments und des organischen Pigments in dem gewünschten Verhältnis als trockene Pulver oder durch Anmischen des wässerigen Presskuchens des organischen Pigments zusammen mit dem anorganischen Füllstoffpigment in Wasser und dann Isolieren der Pigmentzusammensetzung durch Filtration, wobei das gegebenenfalls vorliegende Texturverbessernde Mittel vor, während oder nach dem Anmischen des organischen Pigments und des anorganischen Füllstoffpigments in die Zusammensetzung eingearbeitet wird, umfassend
(a) 0,1 bis 50 Gewichtsteile eines anorganischen Füllstoffpigments,
(b) 50 bis 99,9 Gewichtsteile eines organischen Pigments, wobei das organische Pigment im wesentlichen aus Teilchen mit einer mittleren Teilchengröße im Bereich von 0,01mm bis 25 mm besteht und gegebenenfalls auch
(c) 0,05 bis 20 Gewichtsteile eines Textur-verbessernden Mittels;
wobei die Summe der Gewichtsteile des anorganischen Füllstoffpigments und des organischen Pigments 100 ist.

17. Stir-in-Pigmentzusammensetzung nach Anspruch 16, wobei das anorganische Füllstoffpigment Glimmer oder Talkum ist und wobei vorzugsweise das organische Pigment ein Diketopyrrolopyrrolpigment ist.

18. Stir-in-Pigmentzusammensetzung nach Anspruch 16, wobei das organische Pigment ein Pigmentgemisch darstellt, das aus 1 bis 99 Gewichtsprozent eines Diketopyrrolopyrrolpigments und 1 bis 99 Gewichtsprozent eines Azo-, Chinophthalon-, Anthrachinon-, Iminoisoindolin-, Iminoisoindolon-, Phthalocyanin- oder Chinacridonpigments besteht.

19. Stir-in-Pigmentzusammensetzung nach Anspruch 16, wobei das anorganische Füllstoffpigment Glimmer oder Talkum ist und das organische Pigment C.I. Pigment Red 254, C.I. Pigment Red 255, C.I. Pigment Red 264 und C.I. Pigment Orange 73 ist.

20. Stir-in-Pigmentzusammensetzung nach Anspruch 16, wobei das organische Pigment C.I. Pigment Red 202, C.I. Pigment Red 122 oder C.I. Pigment Violet 19 oder der entsprechende Pigmentrohstoff ist.

## Revendications

1. Procédé pour colorer une matière organique de haut poids moléculaire, qui consiste à disperser uniformément une quantité à effet de pigmentation d'un pigment à incorporer par simple agitation dans la matière organique de haut poids moléculaire, en agitant le pigment à incorporer par simple agitation dans une suspension ou solution de la matière organique de haut poids moléculaire ; dans lequel le pigment à incorporer par simple agitation est un pigment organique à incorporer par simple agitation qui est pigment brut constitué essentiellement de particules de pigment qui ne sont pas en forme de plaquettes, ayant une taille moyenne de particules comprise dans l'intervalle de 0,5 µm à 25 µm, lequel pigment brut n'est pas une carbazole-dioxazine brute ; ou dans lequel le pigment à incorporer par simple agitation est une composition de pigment qui comprend 0,1 à 50 parties en poids d'un pigment minéral de charge et 50 à 99,9 parties en poids d'un pigment organique, le pigment organique ayant une taille moyenne de particules comprise dans l'intervalle de 0,01 µm à 25 µm, et la somme des parties en poids du pigment minéral de charge et du pigment organique étant égale à 100.

2. Procédé de la revendication 1, dans lequel le pigment organique à incorporer par simple agitation ou le pigment organique est un pigment brut de type azoïque, azométhine, méthine, anthraquinone, phtalocyanine, périnone, pérylène, dicétopyrrolopyrrole, thio-indigo, imino-isoindoline, imino-isoindolinone, quinacridone, flavanthrone, indanthrone, anthrapyrimidine et quinophtalone, de préférence un pigment brut de type dicétopyrrolopyrrole, quinacridone, anthraquinone, phtalocyanine, indanthrone ou imino-isoindolinone.

3. Procédé de la revendication 1, dans lequel le pigment organique à incorporer par simple agitation ou la composition de pigment est préparé à partir de son gâteau de presse par séchage par atomisation ou séchage en lit fluidisé.

4. Procédé de la revendication 1, dans lequel le pigment organique à incorporer par simple agitation ou la composition de pigment est préparé à partir de son gâteau de presse par séchage par atomisation, séchage en lit fluidisé ou séchage sur plateau suivi d'une micropulvérisation.

5. Procédé de la revendication 1, dans lequel le pigment organique à incorporer par simple agitation ou le pigment organique est choisi dans le groupe formé par le Pigment Rouge 202 du C.I., le Pigment Violet 19 du C.I., le Pigment Rouge 122 du C.I., le Pigment Rouge 179 du C.I., le Pigment Rouge 170 du C.I., le Pigment Rouge 177 du C.I., le Pigment Rouge 144 du C.I., le Pigment Brun 23 du C.I., le Pigment Orange 61 du C.I., le Pigment Rouge 254 du C.I., le Pigment Rouge 255 du C.I., le Pigment Rouge 264 du C.I., le Pigment Jaune 109 du C.I., le Pigment Jaune 110 du C.I., le Pigment Bleu 15 du C.I., le Pigment Bleu 60 du C.I., le Pigment Orange 73 du C.I., le Pigment Orange 71 du C.I., ou les pigments bruts correspondants.

6. Procédé de la revendication 1, dans lequel le pigment organique à incorporer par simple agitation a une taille moyenne de particules comprise dans l'intervalle de 2 µm à 15 µm, de préférence dans l'intervalle de 2,5 µm à 10 µm.

7. Procédé de la revendication 1, dans lequel le pigment organique à incorporer par simple agitation consiste essentiellement en particules irrégulières, cubiques, aciculaires ou en forme de bâtonnets.

8. Procédé de la revendication 1, dans lequel le pigment organique a une taille moyenne de particules comprise dans l'intervalle de 0,1 à 3 µm.

9. Procédé de la revendication 1, dans lequel la composition de pigment comprend 65 à 95 parties en poids du pigment organique et 5 à 35 parties en poids du pigment minéral de charge.

10. Procédé de la revendication 1, dans lequel le pigment minéral de charge est choisi dans le groupe formé par le mica, le kaolin, le talc et une silice naturelle ou synthétique, et de préférence dans le groupe formé par un mica naturel de la variété muscovite, le talc ou un mélange d'entre eux.

11. Procédé de la revendication 10, dans lequel ledit pigment de mica est un mica revêtu d'oxyde métallique, l'oxyde métallique étant de préférence TiO₂, ZrO₂, Fe₂O₃ ou Cr₂O₃ ou un mélange d'entre eux.

12. Procédé de la revendication 1, dans lequel le pigment minéral de charge a une taille moyenne de particules comprise dans l'intervalle de 1,0 µm à 50 µm, de préférence dans l'intervalle de 1,2 µm à 30 µm.

13. Procédé de la revendication 1, dans lequel la composition de pigment comprend de plus 0,05 à 20 parties en poids, de préférence 1 à 10 parties en poids, d'un agent améliorant la texture choisi dans le groupe formé par les acides gras ayant au moins 12 atomes de carbone, ou leurs amides, esters ou sels, les 1,2-diols aliphatiques, l'huile de soja époxydée, les alcools gras éthoxylés, les cires, les acides résiniques et les sels d'acides résiniques, ou un mélange d'entre eux, de préférence un acide colophanique ou un sel d'acide colophanique, très préférablement un sel d'acide colophanique insoluble dans l'eau.

14. Procédé de la revendication 1, dans lequel la matière organique de haut poids moléculaire est un système d'encre ou de revêtement choisi dans le groupe formé par les éthers de cellulose, les esters de cellulose, les polyuréthannes, les polyesters, les polycarbonates, les polyoléfines, le polystyrène, les polysulfones, les polyamides, les polycycloamides, les polyimides, les polyéthers, les polyéthercétones, les halogénures de polyvinyle, le polytétrafluoroéthylène, les polymères acryliques et méthacryliques, le caoutchouc, les polymères de silicone, les résines phénol/formaldéhyde, les résines mélamine/formaldéhyde, les résines urée/formaldéhyde, les résines époxy, les caoutchoucs de diène et leurs copolymères.

15. Procédé de la revendication 1, dans lequel la matière organique de haut poids moléculaire est un système de revêtement réactif thermodurcissable ou réticulable qui est de préférence une résine de type acrylique, alkyde, époxy, phénolique, mélamine, urée, polyester, polyuréthanne, isocyanate bloqué, benzoguanamine ou ester de cellulose, ou une association d'entre elles, ou qui est un système de revêtement à véhicule d'eau ou de solvant qui est une résine acrylique/mélamine, alkyde/mélamine ou acrylique thermoplastique.

16. Composition de pigment à incorporer par simple agitation, pouvant être obtenue en mélangeant le pigment minéral de charge et le pigment organique en le rapport désiré sous forme de poudres sèches, ou en mélangant le gâteau de presse aqueux du pigment organique avec le pigment minéral de charge dans de l'eau, puis en isolant la composition de pigment par filtration, l'agent améliorant la texture facultatif étant incorporé à la composition avant, pendant ou après le mélange du pigment organique et du pigment minéral de charge, qui comprend
(a) 0,1 à 50 parties en poids d'un pigment minéral de charge,
(b) 50 à 99,9 parties en poids d'un pigment organique, le pigment organique consistant essentiellement en particules ayant une taille moyenne de particules comprise dans l'intervalle de 0,01 mm à 25 mm, et facultativement
(c) 0,05 à 20 parties en poids d'un agent améliorant la texture ;
la somme des parties en poids du pigment minéral de charge et du pigment organique étant égale à 100.

17. Composition de pigment à incorporer par simple agitation de la revendication 16, dans laquelle le pigment minéral de charge est du mica ou du talc et le pigment organique est de préférence un pigment de dicétopyrrolopyrrole.

18. Composition de pigment à incorporer par simple agitation de la revendication 16, dans laquelle le pigment organique est un mélange de pigments consistant en 1 à 99 pour cent en poids d'un pigment de dicétopyrrolopyrrole et 1 à 99 pour cent en poids d'un pigment de type azoïque, quinophtalone, anthraquinone, imino-isoindoline, iminoisoindolone, phtalocyanine ou quinacridone.

19. Composition de pigment à incorporer par simple agitation de la revendication 16, dans laquelle le pigment minéral de charge est du mica ou du talc et le pigment organique est le Pigment Rouge 254 du C.I., le Pigment Rouge 255 du C.I., le Pigment Rouge 264 du C.I. et le Pigment Orange 73 du C.I.

20. Composition de pigment à incorporer par simple agitation de la revendication 16, dans laquelle le pigment organique est le Pigment Rouge 202 du C.I., le Pigment Rouge 122 du C.I. ou le Pigment Violet 19 du C.I., ou le pigment brut correspondant.
